# EUROPEAN PATENT APPLICATION

(11) **EP 1 936 552 A1**
(43) Date of publication of application: **25.06.2008**
(21) Application number: 06127139.1
(22) Date of filing: 22.12.2006
(51) Int. Cl.: G06Q 10/00

(54) **Time and/or time-zone indicator for contacts**

(71) Applicant: Research In Motion Limited, Waterloo, Ontario N2L 3W8 (CA)
(72) Inventor: Scott, Sherryl Lee Lorraine, Toronto, Ontario M5T 1Y4 (CA)
(74) Representative: Rickard, David John

(57) **Abstract**

A wireless mobile device or other communications device has a memory and processor for executing an e-mail application that enables a user to store personal information about the user's contacts, including time-zone differential and/or current local time for each of the contacts. When the user seeks to communicate with a contact (e.g. via e-mail, IM or autodial), or if the user seeks to schedule a meeting or event with one or more contacts, the application will alert the user if the current local time is inappropriate for the contact. The application can also determine the location of the contact in order to update the current local time associated with that contact. The application therefore enables the user of an e-mail application to intelligently communicate or schedule meetings with contacts who are located in different time-zones and may also be traveling.

## Description

The present invention relates generally to telecommunication and, in particular, to e-mail applications that enable a user to store personal information about the user's contacts.

Electronic mail (e-mail) applications such as Microsoft® Outlook™ and Entourage™, Netscape® Messenger™, Eudora™, Pegasus™ and Oracle™ Email enable users to store contact information in a database or "address book".

Typically, the address book provides fields for a variety of personal information about the contact, such as for example the contact's name, job title, company name, business and/or residential address, business and/or residential phone number, fax number, cell phone number, e-mail address, and webpage. Some address books also provide fields for a variety of other work-related information about the contact such as the contact's department, office and profession, as well as the names of the contact's manager and assistant. The address book could also provide fields for personal information about the contact like the contact's nickname, his or her birthday or anniversary, and his or her spouse's name.

Many e-mail applications now enable users to not only communicate or interact with contacts in a variety of ways, including sending an e-mail, sending a meeting request to schedule a meeting with one or more contacts, or auto-dialling a contact. However, as is often the case in an increasingly connected world, a user's contacts can be spread over the globe, i.e. situated in different time zones, so it can be difficult to quickly assess whether a contact is available at a given time of day. In other words, the user has to remember or look up the time-zone differential and then compute the local time of day for the contact in order to assess whether it is a reasonable time of day to receive a phone call or to schedule a meeting or conference call. This becomes particularly problematic when a user tries to schedule a meeting with a large number of contacts dispersed over a large number of different time zones.

Further compounding this difficulty is the fact that a contact may not actually be in his or her "home" time zone. In other words, due to advances in wireless and internet technologies, contacts are increasingly mobile, i.e. it is becoming increasingly common for individuals to travel to other time zones for work or pleasure, and yet to remain connected via the internet and wireless technologies. For contacts who are traveling overseas or to other time zones, it can be difficult to determine whether a given contact is available to receive a phone call or email or whether a given time for a meeting is appropriate.

Accordingly, it would be highly desirable to provide a solution to one or more of these problems so as to enable users of address books to rapidly determine the availability of stored contacts.

### GENERAL

Thus, an aspect of the present invention may provide a communications device having a memory and a processor for executing an application for enabling a user to store personal contact information for one or more contacts and to interact with the one or more contacts, wherein the communications device is characterized in that the application comprises time information for the one or more contacts to enable the user to intelligently interact with the one or more contacts at times that are appropriate for the one or more contacts.

The time information can be a current local time for the contact or a time-zone differential between the contact and the user.

The time information can be updated manually or automatically by determining the current location of the contact.

The application can alert the user when it is inappropriate to autodial, email or instant message the contact and/or can alert the user when a time proposed for an event is inappropriate when the user formulates a request to schedule an event with the contact. The application can enable the user to manually override the alert to email, IM or auto-dial the contact anyway (or to send the request to schedule the event anyway) even if the time is not appropriate. The application can also suggest alternative means of communication to the user, i.e. a different means of communication that would be less intrusive for the contact's current time of day.

A further aspect of the present invention may provide a method for enabling a user to intelligently interact with one or more contacts stored in an address book of an e-mail application, the method comprising steps of enabling the user to select one or more contacts from the address book with whom the user desires to interact; enabling the user to select an interaction function for interacting with the one or more contacts; determining, for each of the one or more contacts, an availability to interact with the user based on time information associated with each contact; and notifying the user of the availability of each of the one or more contacts and optionally also suggesting alternative means of communication.

In one embodiment, the interaction function may comprise auto-dialling the contact. The method can further comprise a step of alerting the user that the current local time is not within predetermined acceptable times for receiving telephone calls. The method can further comprise a step of enabling the user to autodial the contact notwithstanding that the current local time for the contact is outside the predetermined acceptable times for receiving telephone calls.

In another embodiment, the interaction function may comprise sending an invitation for an event to one or more contacts in the user's address book. The method can further comprise a step of alerting the user that a time slot proposed to the contacts for the event is outside the predetermined acceptable times for scheduling such an event for at least one of the contacts whose presence is required. The method can further comprise a step of enabling the user to send the invitation of the event notwithstanding that the time slot proposed for the event is outside the predetermined acceptable times for at least one of the contacts whose presence is required.

Yet a further aspect of the present invention may provide a communications system for enabling a networked user to interact intelligently with contacts through a network, the system comprising: a communications device having a memory and a processor for executing an e-mail application, the e-mail application having an address book enabling the user to store personal information for one or more contacts, the address book comprising time information for at least one of the contacts; a positioning system for determining a current position of one or more of the contacts by locating communications devices associated with the one or more contacts; and a server for receiving and storing the current position for at least one of the contacts, the server being connected to the network to enable the user to download position data for the at least one contact to update the time information for that contact.

In one embodiment, the positioning system may comprise a GPS-enabled wireless device which periodically transmits GPS position data to the server to update the current location of the device.

In another embodiment, the application may enable the user to intelligently interact with the one or more contacts by selectively enabling the user to send a request to schedule an event with the one or more contacts based on the time information associated with the one or more contacts. The application can also comprise an alert for alerting the user that a time selected for an event (or for receiving any other form of communication) is inappropriate for the one or more contacts, the alert being triggered by a comparison of the time selected for the event with a predetermined range of acceptable times for scheduling an even with the contact.

In yet another embodiment, the application may enable the user to autodial the contact. The application can also comprise an alert for alerting the user that it would be inappropriate to autodial the contact, the alert being triggered by a comparison of the current local time for the contact with a predetermined range of acceptable times for telephoning the contact.

### BRIEF DESCRIPTION OF THE DRAWINGS

Further features and advantages of the present invention will become apparent from the following detailed description, taken in combination with the appended drawings, in which:

FIG. 1 is a schematic depiction of a network in which a user's communications device (e.g. user Amy's networked personal computer) stores current time-zone information about her contacts in an address book in an e-mail application stored on her computer in accordance with an embodiment of the present invention;

FIG. 2 is a schematic depiction of a network in which users' communications devices store current time-zone information in respective address books, illustrating how the current time-zone information is updated when a user (Emily) travels from a first wireless network in one time zone to a second wireless network in another time zone, in accordance with another embodiment of the present invention;

FIG. 3 is a schematic depiction of a network in which the current time-zone information is stored in a user's mail server, in accordance with another embodiment of the present invention; and

FIG. 4 is a flowchart depicting the steps of a method of intelligently establishing a communication with a contact based on the contact's current local time, in accordance with an aspect of the present invention;

FIG. 5 is a depiction of an e-mail application interface displaying time-zone differential and current local time for a contact in accordance with one embodiment of the present invention;

FIG. 6 is a depiction of the e-mail application interface of FIG. 5 performing an Availability Check for a contact in accordance with another embodiment of the present invention;

FIG. 7 is a depiction of an e-mail application interface in accordance with another embodiment of the present invention wherein alternative means of communications are proposed to the user when a contact is determined to be unavailable.

It will be noted that throughout the appended drawings, like features are identified by like reference numerals.

### DESCRIPTION OF PREFERRED EMBODIMENTS

In accordance with a preferred embodiment of the present invention, a communications device has a memory and processor for executing an e-mail application that enables a user to store personal information about the user's contacts, including time-zone differential and/or current local time for each of the contacts. When the user seeks to communicate with a contact (e.g. via e-mail, IM or autodial), or if the user seeks to schedule a meeting or event with one or more contacts, the application will alert the user if the current local time is inappropriate for the contact. Optionally, the application can also determine the location of the contact in order to update the current local time associated with that contact. The application therefore enables the user to intelligently communicate or schedule meetings with contacts who are located in different time-zones and may also be traveling.

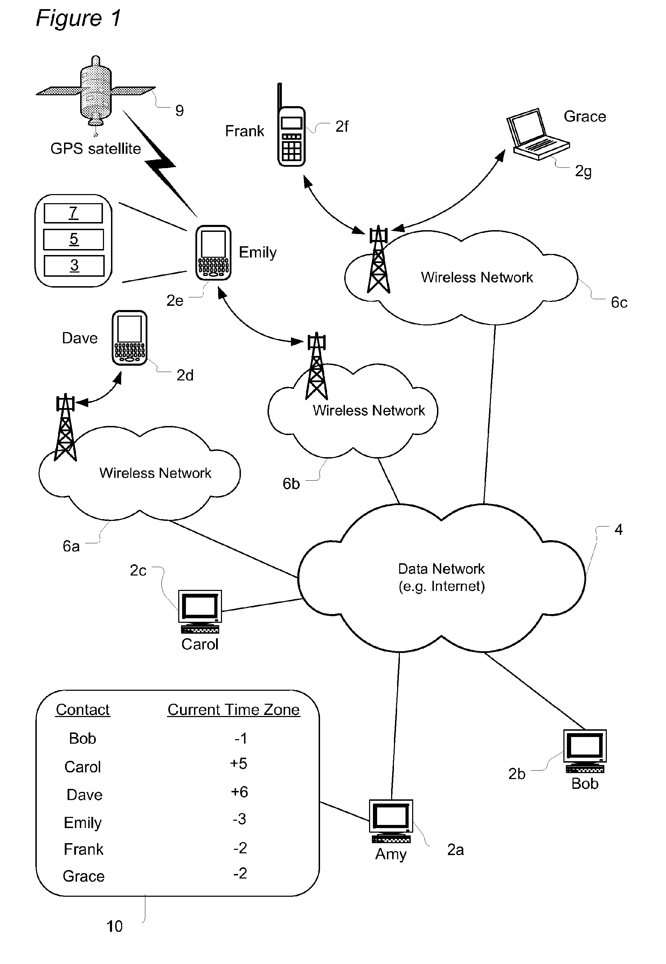

Referring to FIG. 1, a plurality of communications devices 2a, 2b, 2c, 2d, 2e are shown connected via a data network 4 (e.g. the Internet) and optionally also via respective wireless networks 6. For the sake of illustration, seven networked users are shown, namely Amy, Bob, Carol, Dave, Emily, Frank, and Grace, although the number of users and the types of communications devices can of course vary. As shown, Amy operates a personal computer 2a (or workstation, laptop or equivalent) that is connected via landline (e.g. dial-up modem, DSL modem, high-speed cable modem or equivalent) to the Internet (the data network 4). Similarly, Bob and Carol operate personal computers 2b and 2c, respectively, which are also connected to the data network 4 by wireline. Amy, Bob and Carol are each connected to the data network 4 in different time zones. As shown, Dave operates a wireless-enabled PDA 2d that is wirelessly connected to a first wireless network 6a whereas Emily operates her own wireless-enabled PDA 2e that is wirelessly connected to a second wireless network 6b situated in a different time zone. As further depicted in FIG. 1, Frank uses a cellular phone (mobile phone) 2f that is in wireless communication with a third wireless network 6c in yet another time zone. In the same time zone, Grace uses a wireless-enabled laptop computer 2g that is also wirelessly connected to the third wireless network 6c.

Therefore, as depicted in FIG. 1, a plurality of wired and wireless communications devices 2a-2g (also known as "terminal devices") are hosted by the interconnected data network 4 and wireless networks 6a-6c. As illustrated, the wireless communication devices can be any of a wide variety of wireless devices including but not limited to wireless-enabled PDAs, mobile or cellular telephones, wireless-enabled laptop computers, self-service kiosks (not shown) and two-way pagers (not shown).

In the example shown in FIG. 1, user Amy stores personal contact information about each of the six other users, i.e. her "contacts", in an address book 10 (or equivalent database) in a memory (not shown) of her personal computer 2a, as is well known in the art. Therefore, when user Amy seeks to communicate with one or more of her contacts, she can consult the address book and determine personal information (address, phone number, fax number, etc.) about that contact. The address book 10 is typically within an e-mail application (such as MS Outlook) which enables the user to interact with one or more of the contacts, such as by e-mailing one or more contacts, autodialing a contact, or sending a request to schedule an event or meeting with one or more contacts. As these communications functions are well known in the art, they will not be described in further detail.

In accordance with the preferred embodiment of the present invention, the address book 10 (or other component of the application) stores time information for each of the contacts. The time information can be a current local time for each contact or the time information can be a (current) time-zone differential between the user and the contact. This time information serves as a temporal indicator to the user that enables the user to intelligently interact with contacts based on whether a certain interaction is appropriate for a given time of day. In other words, the application uses time information as a temporal indicator to inform, guide, alert and/or notify the user about the current local time (or time-zone differential) for one or more contacts. The time information can be input directly by the user as a time-zone differential or it can be derived from location information about the contact, e.g. time information for a given contact can be derived or deduced from the contact's address or from the area code and prefix of the contact's phone number. For email or instant messaging, the contact's time information can be derived by geographically correlating the IP address number of an e-mail address (which contains country/regional/city domain information) with a global location. Alternatively, the time information can be derived by determining the present location of the contact, e.g. by GPS or other tracking means.

For example, as depicted in FIG. 1, the address book 10 shows each of Amy's contacts, namely Bob, Carol, Dave, Emily, Frank and Grace and for each one of these contacts, the address book 10 shows a respective current time-zone differential. For example, assume that user Amy has her computer 2a situated somewhere in the eastern seaboard of North America, i.e. in Eastern Time (ET), which is Greenwich Mean Time -5 hours, such as for example in New York City or Toronto. Assume that Bob's computer 2b is situated in Chicago (Central Time) and that Carol's computer 2c is connected to the Internet in London, England, which is Greenwich Mean Time (GMT). Furthermore, let us assume, again simply for the sake of illustration, that Dave is in Paris (GMT + 1 hour), that Emily is in Los Angeles (Pacific Time) and that Frank and Grace are in Mountain Time (e.g. Calgary). In this example, therefore, Amy's address book 10 would show current time-zone differentials for each of her contacts as follows: Bob -1 hour, Carol +5 hours, Dave +6 hours, Emily -3 hours, Frank -2 hours, and Grace -2 hours.

Alternatively, the time information (or temporal indicator) can be presented in the address book 10 as a current local time for each of the contacts. As will be readily appreciated, knowledge of Amy's current local time enables the application to quickly convert the time-zone differentials into current local times for each of Amy's contacts. The application preferably shows both current local time and time-zone differential, although it could present only one or the other, or alternatively, it could enable the user to toggle between current local time and time-zone differential. As a further refinement, the application could be user-configurable to present either current local time or time-zone differential or both.

In one embodiment, the time information can be input by the user for each of his or her contacts (e.g. as a time-zone differential). More commonly, however, the time-zone information is simply derived from address information. Alternatively, the time information can be derived from the area code and prefix of the contact's phone number. This information can be input or uploaded into the Address Book of the application. Alternatively, the time information can be obtained "on the fly" for a contact not listed in the Address Book by simply deriving time of day information from the area code and prefix of the phone number being dialled. For example, if a user of a handheld wireless device such as a PDA, who is presently located in Toronto, begins dialling a phone number in London, England, the application can be configured (or pre-configured) to alert the user that it is midnight in London, England. For example, this might be in the form of a voice warning: "It is now midnight in the location associated with the number you are dialling. Do you still wish to place the call?" The user could select to place the call anyway, abort the call, or use a different form of communication.

Once the application (or address book) has time information for each of the user's contacts (or at least a subset thereof), the application can then enable the user to interact intelligently with the contacts based on the time information. In other words, the application can alert the user when the user attempts to interact with one or more contacts if the interaction is inappropriate given the current local time (or time-zone differential) associated with the one or more contacts. For example, if a user wishes to auto-dial a contact, the application can verify whether the current local time associated with the contact is an appropriate time for receiving a telephone call. If not, the application will alert the user. The application can also have an override option to nonetheless auto-dial the contact even if the current local time is not appropriate for receiving a phone call. In another embodiment, the override option can suggest alternative means of communication to the user, i.e. propose to the user a different communication function that is less intrusive or disruptive to the contact, given the contact's current local time. For example, if the user attempts to instant message or telephone a contact in another time zone where it is currently an inappropriate time of day, the application could alert the user by stating so in writing and/or orally. For example, the application could alert the user by stating something along the lines of: "It is now midnight in Toronto. Instead of placing this call, would you like to (1) go directly to voice mail or (2) send an e-mail instead or (3) place the call anyway" (the override option).

The time information would also enable the application to determine whether a time selected for an event or meeting is appropriate for the contact(s) before the user sends the request to the contact(s) to schedule the event or meeting. This is particularly useful when scheduling events or meetings involving a number of contacts in different time zones. Again, the application preferably has an alert for alerting the user that a time selected for an event is inappropriate for the one or more contacts, the alert being triggered by a comparison of the time selected for the event with a predetermined range of acceptable times for scheduling an event with the contact. The alert is preferably a visual indicator although a sound or vibration could be used to alert the user, particularly for handheld wireless devices. The application can further provide a manual override to enable the user to nonetheless send the request for the event for the time originally selected even if the time originally selected for the event is inappropriate. If the time for the meeting is inappropriate, the application can also suggest to the user a next available time for the meeting. For example, the application could provide an alert that states something along the lines of: "The time you're trying to book for this meeting is not convenient for everyone. Show next available time for all invited contacts?" On responding in the affirmative (e.g. clicking on a "yes" button in a dialog box), the application would determine the next available time by comparing the time-zone differentials of the invitees.

In a further refinement, the application could also consult blocked out times in contacts' calendars (provided these calendars are accessible by the application).

In yet a further refinement, the application could track not just current location but also future (or anticipated) location. Therefore, for a businessman traveling from city to city in different time zones, his PDA could upload his travel schedule to the server to enable dissemination or downloading of the travel schedule to the user's device. The user's application could then determine the contact's availability for upcoming days.

As will now be readily appreciated, the time information can be used by an e-mail application to not only inform, guide and alert the user when the user seeks to schedule an event or meeting or when the user seeks to autodial the contact, but it can also be useful in notifying, guiding and alerting the user about the contact's availability prior to sending other forms of communication such as, for example, an e-mail, instant message (IM) or fax.

As depicted schematically in FIG. 1, each communications device in accordance with a preferred embodiment of the present invention has a processor 3 and a memory 5 for executing an application for enabling a user to store personal contact information for one or more contacts and to interact with the one or more contacts. Preferably, the time information is stored within an address book of an e-mail application executing on the communications device although it should be understood that the time information could be stored in other types of software applications or in other formats.

The wireless communication devices 2d-2g, or "terminal devices", generally include the processor or microprocessor 3 connected to an RF section for wireless communications, the memory 5 (at least a portion of which will normally be non-volatile), and a user interface (UI) including a display and one or more user input devices (UID), e.g. a keyboard, thumb-wheel, stylus, microphone, etc. The microprocessor operates under software control to provide the functionality of the terminal device. Preferably, the software is designed on a layered model, in which a runtime environment (RE) translates between application software, such as the e-mail application, and the native machine-language of the terminal device to control the terminal device hardware, and communicate with data services. This layered software model, and the manner in which it operates, is known from Applicant's co-pending United States Patent Publications Nos. 2004/0215700 and 2004/0220998.

The communications device executes an e-mail application which, in accordance with the preferred embodiment of the present invention, includes time information for the one or more contacts to enable the user to intelligently interact with the one or more contacts at times that are appropriate for the one or more contacts. In other words, the application executing on the communications device enables the user to intelligently interact with the one or more contacts by selectively enabling the user to communicate with the one or more contacts based on the time information associated with the one or more contacts. The application executing on the communications device can include an alert for alerting the user that it would be inappropriate to communicate with (e.g. autodial) the contact, the alert being triggered by a comparison of the current local time for the contact with a predetermined range of acceptable times for communicating (e.g. telephoning) the contact. The application executing on the communications device can further include a manual override for nonetheless communicating with (e.g. autodialing) the contact even if the current local time is outside the predetermined range of acceptable times for the communicating (e.g. telephoning) the contact. Furthermore, the application can further suggest to the user alternative, less intrusive means of communication with the contact.

Similarly, the application running on the communications device can enable the user to intelligently interact with the one or more contacts by selectively enabling the user to send a request to schedule an event with the one or more contacts based on the time information associated with the one or more contacts. The application running on the communications device can have an alert for alerting the user that a time selected for an event is inappropriate for the one or more contacts, the alert being triggered by a comparison of the time selected for the event with a predetermined range of acceptable times for scheduling an event with the contact. The application can further provide a manual override to enable the user to nonetheless send the request for the event for the time originally selected even if the time originally selected for the event is inappropriate.

In this modern age, with individuals traveling more and more and yet remaining connected to each other via the Internet and wireless networks, it is important to provide a means for updating time information when contacts travel or roam. In other words, determining an appropriate time for a contact to receive a call or for a contact to participate in a meeting requires that contacts' locations be tracked and their respective time information be updated. If a contact cannot be tracked, then the last available location for that contact can be used, or failing that, the current location can be assumed to be the contact's home location. If no address is available for the contact, the location can still be derived from the contact's phone number (area code and prefix).

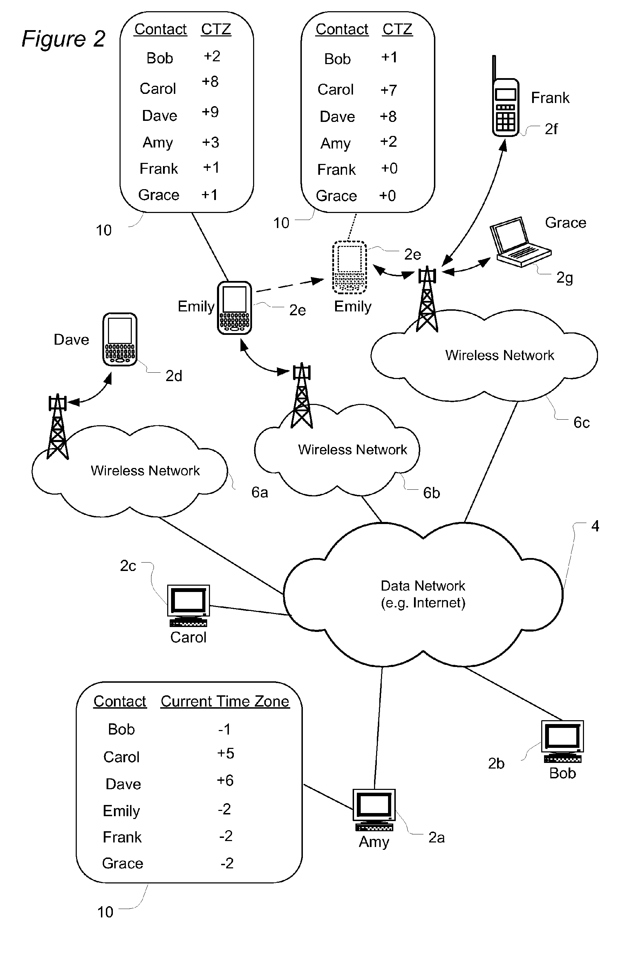

For example, as shown in FIG. 2, consider what happens when Emily roams from her home wireless network 6b to a different wireless network in a different time zone. In this example, Emily has moved from Pacific Time to Mountain Time. From Amy's perspective, the time-zone differential (Current Time Zone or "CTZ") that is specified in her address book for her contact Emily will be updated from -3 hours to -2 hours while all her other contacts remain the same. For Emily, however, as she has changed time zones, all of her contacts will be updated. Emily's contacts are updated as follows: Bob is updated from +2 to +1. Carol is updated from +8 to +7. Dave is updated from +9 to +8. Amy is updated from +3 to +2. Frank and Grace are updated from + 1 to 0.

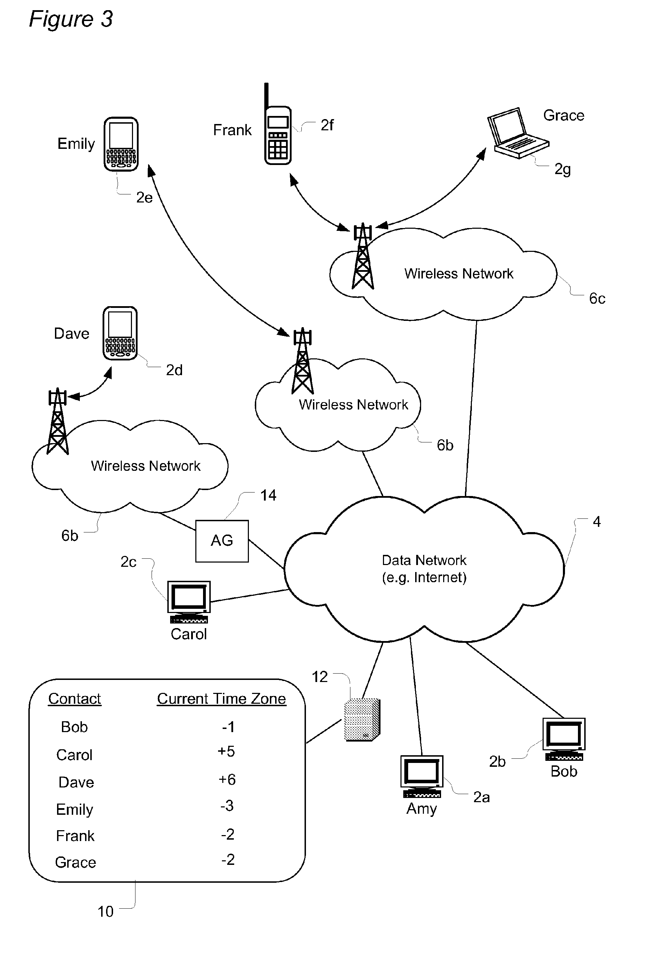

It should be noted that when the user (in this case Emily) moves time zones, all contacts are automatically updated accordingly. However, tracking the movements of other contacts requires querying the contacts are a system by which contacts update their position by notifying a server 12 (as shown in FIG. 3) when they are roaming or traveling. The server 12 receives, stores and updates time information (e.g. current time-zone differentials) for each of the contacts. The server 12 is connected to the Internet or other data network 4 to enable each of the networked users to access and download time information for each of that user's contacts. Accessing and downloading the time information from the server can be done automatically (based on a preset time interval) or manually (at the express request of the user prior to interacting with the contact or contacts). In another embodiment, the server 12 can poll each of the communications device at regular intervals as a means of tracking the location of each of the communications devices. Alternatively, the server 12 can both actively poll the communications devices and passively receive location updates from the communications devices.

The server can be a dedicated server connected to the data network 4 or it could also be connected to a wireless network. The server could also be incorporated within an applications gateway (AG) 14 or part of a mail server, or could be resident within any one or more of the communications devices themselves. As described in Applicant's co-pending United States Patent Publications Nos. 2004/0215700 and 2004/0220998, operation of the AG 14 enables a software application (e.g. an e-mail application such as MS Outlook) executing in a terminal device to communicate with data services (not shown) offered through the data network 4. This operation may, for example, include accessing and downloading files from back-end data sources (not shown) connected to the data network 4 or downloading or uploading e-mail messages to and from one or more e-mail exchange servers, or "mail servers".

In the preferred embodiment, the communications device can also update the current local time for one or more contacts by determining the current location for each of the one or more contacts. Alternatively, the communications device can update the time-zone differential between the user and a given contact by determining the current locations of both the user and the contact.

Determining the current location (and hence the current time-zone differential or current local time) can be done using GPS (Global Positioning System) technology or by correlating the contact's phone number and/or current IP address with a location and time zone. To update a contact's location who is traveling or roaming with a wireless communication device, it is also possible to determine which wireless network is currently hosting the wireless device (with or without triangulation if the wireless network spans two time zones) or any combination of these techniques. For example, for a contact who is roaming in a different time zone from her home time zone, the caller cannot simply rely on a time-zone differential extracted from the area code and prefix of the contact's phone number. Rather, the actual location of the roaming contact should be determined, using techniques known in the art for finding a roaming wireless user, so that the caller can be apprised of the contact's actual current location. The wireless device can thus notify the caller that the contact is roaming and that, where the contact is presently roaming, the current time is inappropriate (or appropriate) for receiving a call. In other words, in this example, a handheld wireless communications device receives as input data a telephone number of another person's roaming wireless device from which the current local time is derived by determining in which time zone the wireless device is currently roaming. For example, in addition to notifying the user of the wireless device that the called party is roaming, the wireless device could also present (visually or orally) the time of day and/or location of the called party. By way of example, the wireless device could state: "The party you are calling is now roaming in Los Angeles, California, where it is currently 5:05 a.m. Do you still wish to place this call?" If the user replies in the negative, the wireless device (again by way of example only) could suggest: "Do you wish to use an alternate means of communication?"

As shown in FIG. 1, the communications device in accordance with the preferred embodiment of the present invention (e.g. Emily's wireless-enabled PDA 2e) has an onboard positioning system 7, e.g. a GPS chip embedded within the communications device. The GPS chip receives signals from a plurality of GPS satellites 9 and generates position data for the communications device 2e. The PDA 2e can also include a tracking module (not shown) which is software and/or hardware for receiving the GPS position data from the positioning system and for communicating the position data through a network connection to a server 12 for storing and updating current location information for all networked contacts. Each user can thus update the current location for any one of that user's contacts by downloading the current location information from the server 12.

As shown in FIG. 3, an Application Gateway (AG) 14 is interposed between one of the wireless networks 6b and the data network 4, such as for example, the Internet. The AG 14 generally operates to mediate data traffic flowing between the wireless communication device 2d connected to the wireless network 6b and data services accessible through the data network 4 in the manner described in Applicant's co-pending United States Patent Publications Nos. 2004/0215700 and 2004/0220998, both of which are incorporated herein by reference.

In accordance with another embodiment of the present invention, a communications system for enabling a networked user to interact intelligently with contacts through a network includes a communications device of the type described in the foregoing paragraphs. The communications device has a memory and a processor for executing an e-mail application having an address book enabling the user to store time information for one or more contacts. The system also includes a positioning system for determining a current position of one or more of the contacts by locating communications devices associated with the one or more contacts. The positioning system is preferably GPS, involving GPS chips in each wireless device capable of receiving signals from a constellation of GPS satellites. Finally, the system also includes a server 12 for receiving and storing the current position for at least one of the contacts. The server is connected to the network to enable the user to download position data for the at least one contact to update the time information for that contact.

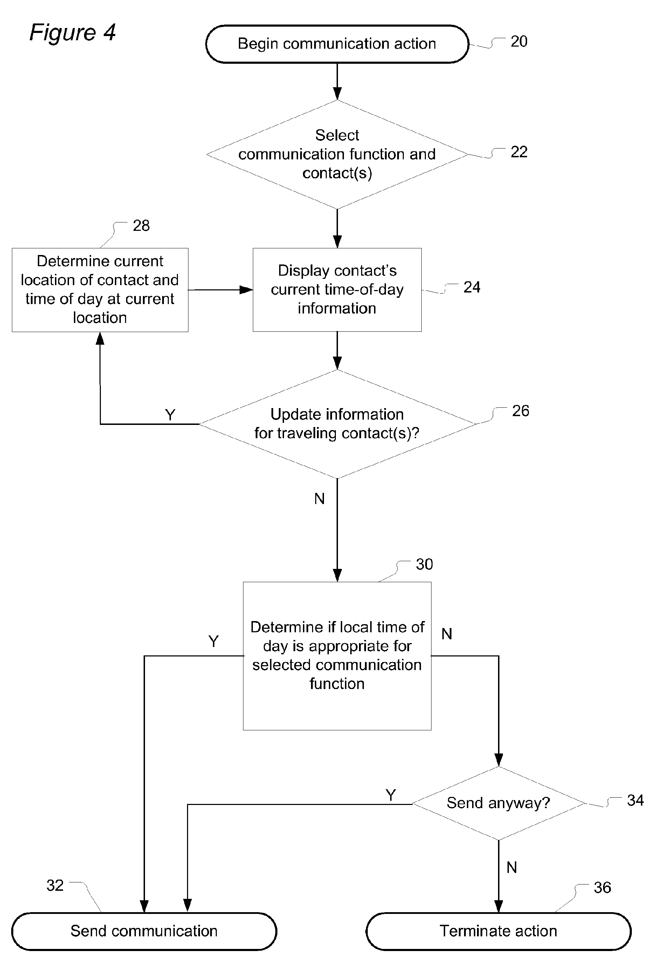

With reference now to FIG. 4, a method for enabling a user to intelligently interact with one or more contacts stored in an address book of an e-mail application includes steps of enabling the user to select one or more contacts from the address book with whom the user desires to interact, enabling the user to select an interaction function for interacting with the one or more contacts, determining, for each of the one or more contacts, an availability to interact with the user based on time information associated with each contact, and notifying the user of the availability of each of the one or more contacts.

In one specific embodiment, as detailed by the flowchart shown in FIG. 4, the user begins a communication action at step 20 by entering the e-mail application. At step 22, the user selects a communication function by which the user intends to interact with one or more contacts. For example, the user can choose to send a request for a meeting to a plurality of contacts or the user can choose to autodial one of the contacts. At step 24, the application displays the contact's time information. At step 26, the application asks the user if the user wishes to update the contact's location. This is particularly useful for contacts who travel. Step 26 is optional since the updating of the contact's location can be done automatically. At step 28, the application determines the current location of the contact and updates the time information. At step 30, the application determines, based on the contact's current location, if the current time for the contact is appropriate for interacting with the user (e.g. receiving a phone call or participating in a meeting). If the time is appropriate, the communication is sent at step 32. If the time is inappropriate, the application asks the user at step 34 if wishes nonetheless to send the communication despite the fact that the time of day is not appropriate. If the user wishes to send the communication anyway, the communication is sent at step 32. Otherwise, the communication is not sent at step 36 (and the application can at that point prompt the user to either save, delete or edit the communication function and/or the contacts involved and/or the times requested for the interaction).

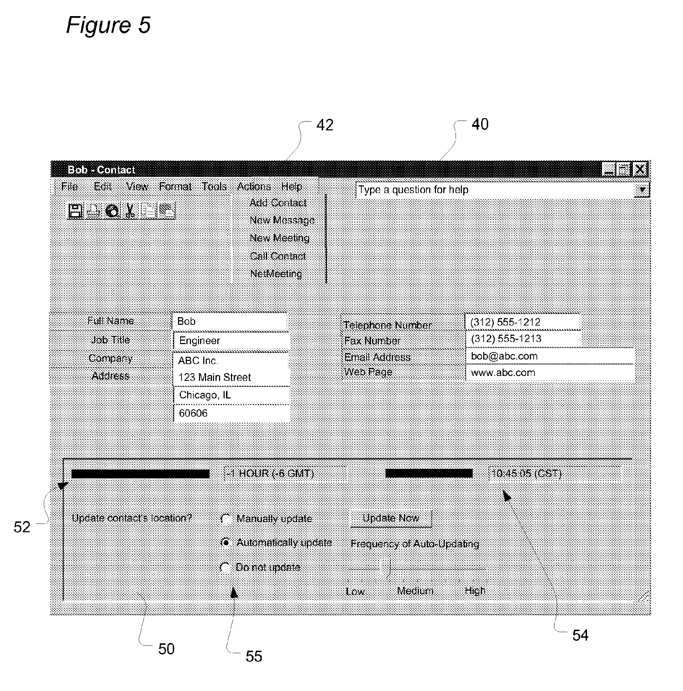

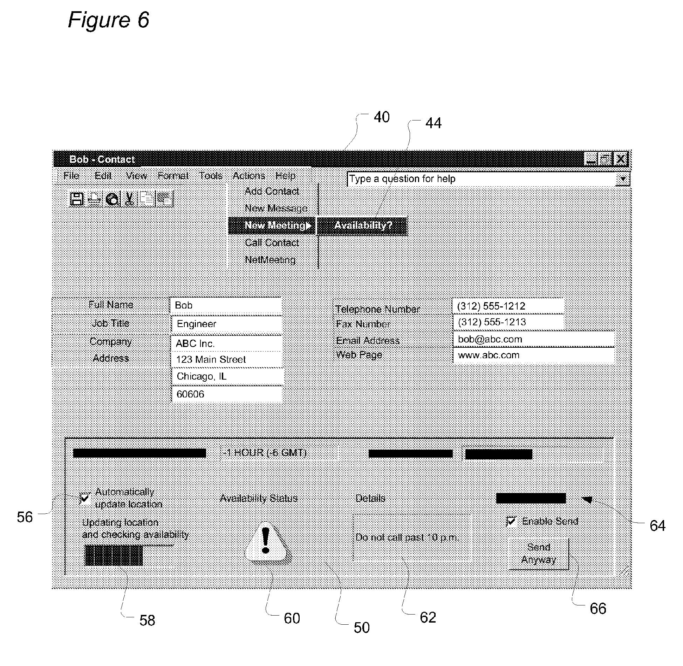

FIGS. 5 and 6 show, by way of example only, e-mail application interfaces in accordance with an embodiment of the present invention. As shown in FIG. 5, the application interface 40 includes a number of drop-down menus and buttons, including an Action Menu 42 providing a number of actions (or communication functions) for communicating and interacting with the contact Bob, namely sending a new message, requesting a meeting, call (auto-dial) the contact, or conduct a NetMeeting™. Other actions could be added, such as sending a web fax using WinFax™.

FIG. 5 is a depiction of an e-mail application interface 40 displaying time information in a time information window 50. In this example, the time information window 50 displays a time-zone differential 52 and a current local time 54 for contact Bob. Aside from the standard personal contact information, the time information in accordance with embodiments of the present invention includes a location update feature 55 to either manually or automatically update the contact's current location. In this example, the interface provides choices to manually update, auto-update or not to update at all. When auto-update is selected, the user can set the frequency of auto-updates.

FIG. 6 is a depiction of the e-mail application interface 40 of FIG. 5 performing an Availability Check for the contact Bob. As shown in FIG. 6, the application interface 40 can enable the user (under the Action Menu) to perform an Availability Check 44 prior to sending a new meeting request. Upon requesting the Availability Check 44, the time information window 50 changes to present availability verification information in addition to the current local time and time-zone differential. For example, the application interface can provide a check box 56 for enabling automatic updating location, a progress bar 58 for showing the updating in action, and an availability status icon 60 to indicate graphically (using a readily identifiable icon) to the user whether the contact is available to receive a communication or to engage in an interaction. A details field 62 provides further information, such as for example specific information about the contact's availability. The contact's availability can be determined based on that contact's personal profile. For example, a specific contact may be on holiday or, alternatively, the contact may indicate that he or she is available late into the night or outside regular business hours. In this example, the details field 62 shows that the contact's personal profile contains a warning not to call the contact past 10 p.m. local time. For example, contact Bob may have a home office and wishes to advertise to his fellow contacts that he does not wish to be disturbed by a telephone call past 10 p.m. The personal profile can be uploaded by the various users and contacts to the server 12, for example, whereupon this information is shared amongst the other users/contacts.

As further depicted in FIG. 6, the interface also has a manual override option 64 and a "Send Anyway" button 66 to enable the user to nonetheless send the communication or meeting request even if the time is determined to be inappropriate.

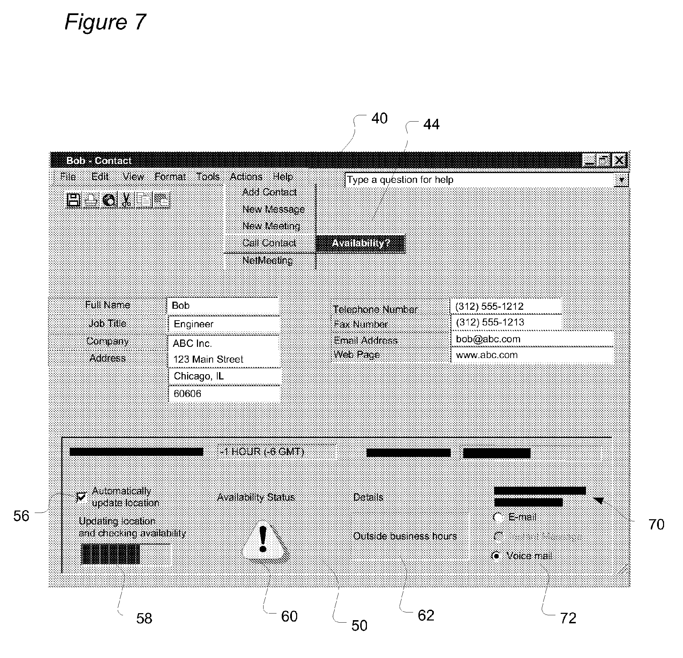

Alternatively, as illustrated in FIG. 7, the interface can suggest to the user alternative means for communicating with the contact, i.e. proposing to the user that he or she uses a different, less disruptive form of communication given that the current local time for the selected contact is inappropriate. As shown in FIG. 7, the interface 40 can provide alternative communication means 70 having a number of options 72 such as e-mail, instant message or voice mail. In a variant, one option could an override option (i.e. to initiate the communication anyway despite the time of day or expected unavailability of the contact). The application can disable or "grey-out" any of the alternative means of communication that are also inappropriate and/or unavailable.

It should be understood that the application interfaces shown in FIGS. 5 ,6 and 7 are merely intended to be illustrative of one preferred manner of implementing the present invention. The application interface itself is of course immaterial to the crux of the invention and therefore can have virtually any visual configuration, i.e. any "look and feel".

For the purpose of this specification, "communications device" includes wireless communications device, such as a wireless-enabled PDA, cellular or mobile phone, wireless-enabled laptop, and also includes wired or "wireline" devices such as telephone, fax, and personal computers (or laptops, workstations or other computing devices) connected via modem to a data network such as the Internet. While the embodiments described herein are directed primarily to electronic mail being exchanged among a group of users having networked computers and wireless-enabled PDAs, the embodiments could be modified for use with other telecommunication devices. For example, a fax machine could have a time-zone feature that alerts a user when he or she begins to send a fax to a desired recipient situated in another time zone.

For the purposes of this specification, times may be expressed either in a 12-hour (a.m./p.m.) format or in a 24-hour (European-style) format. The application can optionally provide the time information in one format or the other, or be user-configurable to provide the time information in the format desired by the user.

For the purposes of this specification, the expression "user" and "contact" may be interchangeable depending on the point of view or perspective from which the invention is described. In other words, each "user" (e.g. Amy) has a number of contacts (Bob, Carol, Dave, etc.). However, from Bob's perspective, Amy is his contact. Therefore, Amy is both a "user" and a "contact" depending on the point of view.

The embodiments of the invention described above are intended to be exemplary only. Any modifications and/or variations to the embodiments described herein that can be readily envisioned by a person of ordinary skill in the art are intended to fall within the spirit and scope of the present invention. The scope of the invention is therefore intended to be limited solely by the scope of the appended claims.

## Claims

1. A communications device having a memory and a processor for executing an application for enabling a user to store personal contact information for one or more contacts and to interact with the one or more contacts, wherein the application comprises time information for the one or more contacts to enable the user to intelligently interact with the one or more contacts at times that are appropriate for the one or more contacts.

2. The communications device as claimed in claim 1 wherein the time information comprises a current local time for the contact.

3. The communications device as claimed in claim 2 wherein the current local time is updated by determining the current location of the contact.

4. The communications device as claimed in claim 1 wherein the time information comprises a time-zone differential between the user and the contact.

5. The communications device as claimed in claim 4 wherein the time-zone differential is updated by determining the current locations of the user and contact.

6. The communications device as claimed in any one of the preceding claims wherein the application is configured to enable the user to intelligently interact with the one or more contacts by selectively enabling the user to send a request to schedule an event with the one or more contacts based on the time information associated with the one or more contacts.

7. The communications device as claimed in claim 6 wherein the application comprises an alert for alerting the user that a time selected for an event is inappropriate for the one or more contacts, the alert being triggered by a comparison of the time selected for the event with a predetermined range of acceptable times for scheduling an event with the contact.

8. The communications device as claimed in claim 7 wherein the application is configured to provide a manual override to enable the user to nonetheless send the request for the event for the time originally selected even if the time originally selected for the event is inappropriate.

9. The communications device as claimed in claim 7 wherein the application is configured to suggest a next available time for scheduling the event.

10. The communications device as claimed in claim 1 wherein the application is configured to enable the user to intelligently interact with the one or more contacts by selectively enabling the user to communicate with the one or more contacts based on the time information associated with the one or more contacts.

11. The communications device as claimed in claim 10 wherein the application is configured to enable the user to autodial the contact.

12. The communications device as claimed in claim 11 wherein the application comprises an alert for alerting the user that it would be inappropriate to autodial the contact, the alert being triggered by a comparison of the current local time for the contact with a predetermined range of acceptable times for telephoning the contact.

13. The communications device as claimed in claim 12 wherein the application further comprises a manual override for nonetheless autodialing the contact even if the current local time is outside the predetermined range of acceptable times for the telephoning the contact.

14. The communications device as claimed in claim 12 wherein the application is adapted to further suggest to the user at least one alternative means of communication that would be more appropriate for communicating with the contact given the current local time associated with the contact.

15. The communications device as claimed in any one of the preceding claims further comprising:
an onboard positioning system for generating position data for the communications device;
a tracking module for receiving the position data from the positioning system and for communicating the position data through a network connection to a server for storing and updating current location information for all networked contacts, whereby each user can update the current locations of that user's contacts by downloading the current location information from the server.

16. The communications device as claimed in claim 15 wherein the positioning system is a global positioning system 'GPS' chip embedded within the communications device.

17. A method for enabling a user to intelligently interact with one or more contacts stored in an address book of an e-mail application, the method comprising steps of:
enabling the user to select one or more contacts from the address book with whom the user desires to interact;
enabling the user to select an interaction function for interacting with the one or more contacts;
determining, for each of the one or more contacts, an availability to interact with the user based on time information associated with each contact; and
notifying the user of the availability of each of the one or more contacts.

18. The method as claimed in claim 17 wherein the step of determining the availability of the contact comprises a step of determining a time-zone differential for the contact relative to the user.

19. The method as claimed in claim 18 wherein the step of determining the time-zone differential for the contact relative to the user comprises a step of updating current locations for the user and the contact.

20. The method as claimed in claim 17 wherein the step of determining the availability of the contact comprises a step of determining a current local time for the contact.

21. The method as claimed in claim 20 wherein the step of determining the current local time for the contact comprises a step of updating a current location for the contact.

22. The method as claimed in any one of claims 17 to 21 wherein the interaction function comprises auto-dialling the contact.

23. The method as claimed in claim 22 further comprising a step of alerting the user that the current local time is not within predetermined acceptable times for receiving telephone calls.

24. The method as claimed in claim 23 further comprising a step of enabling the user to autodial the contact notwithstanding that the current local time for the contact is outside the predetermined acceptable times for receiving telephone calls.

25. The method as claimed in any one of claims 17 to 21 wherein the interaction function comprises sending an instant message (IM) to a selected contact's IM-enabled e-mail address.

26. The method as claimed in claim 25 further comprising a step of alerting the user that the current local time is not within predetermined acceptable times for receiving instant messages.

27. The method as claimed in claim 26 further comprising a step of enabling the user to instant-message the contact notwithstanding that the current local time or the contact is outside the predetermined acceptable times for receiving instant messages.

28. The method as claimed in any one of claims 17 to 21 wherein the interaction function comprises sending an invitation for an event to one or more contacts in the user's address book.

29. The method as claimed in claim 28 further comprising a step of alerting the user that a time slot proposed to the contacts for the event is outside the predetermined acceptable times for scheduling such an event for at least one of the contacts whose presence is required.

30. The method as claimed in claim 29 further comprising a step of enabling the user to send the invitation of the event notwithstanding that the time slot proposed for the event is outside the predetermined acceptable times for at least one of the contacts whose presence is required.

31. The method as claimed in any one of claims 17 to 30 wherein the step of determining the availability of the contact comprises a step of deriving the time information from a telephone number associated with the contact.

32. The method as claimed in any one of claims 17 to 30 wherein the step of determining the availability of the contact comprises a step of deriving the time information from an address associated with the contact.

33. A communications system for enabling a networked user to interact intelligently with contacts through a network, the system comprising:
a communications device as claimed in any one of claims 1 to 16;
a positioning system for determining a current position of one or more of the contacts by locating communications devices associated with the one or more contacts; and
a server for receiving and storing the current position for at least one of the contacts, the server being connected to the network to enable the user to download position data for the at least one contact to update the time information for that contact.

34. The system as claimed in claim 33 wherein the positioning system comprises a GPS-enabled wireless device which is configured to periodically transmit GPS position data to the server to update the current location of the device.

35. A communications device comprising:
an input device enabling a user of the communications device to input data for initiating communication with another person;
a processor for correlating the input data with a global location and thus a current local time of day for the person with whom the communication is to be established; and
an output device for alerting the user if the current local time associated with the other person is inappropriate.

36. The communications device as claimed in claim 35 wherein the input data comprises a telephone number from which the current local time is derived by correlating an area code and a prefix with a geographical location.

37. The communications device as claimed in claim 35 wherein the input data comprises a telephone number of a roaming wireless device from which the current local time is derived by determining in which time zone the wireless device is currently roaming.

38. The communications device as claimed in claim 35 wherein the input data comprises an e-mail address from which the current local time is derived by correlating an IP address with a geographical location.

39. The communications device as claimed in any one of claims 35 to 38 wherein the output device comprises a display screen embedded within the device for providing a visual alert to the user if the current local time is inappropriate for receiving the communication.

40. The communications device as claimed in any one of claims 35 to 38 wherein the output device comprises a speaker for providing an oral alert to the user if the current local time is inappropriate for receiving the communication.

41. The communications device as claimed in any one of claims 35 to 38 wherein the output device is configured to suggest at least one alternative means for communicating with the other person if the current local time is inappropriate for receiving the communication.

42. A computer readable medium storing computer readable instructions for causing a computing device to perform the method of any one of claims 17 to 32.

## Amended claims

### Amended claims in accordance with Rule 137(2) EPC.

**1.** A communications device having a memory and a processor for executing an application for enabling a user to store personal contact information for one or more contacts and to interact with the one or more contacts, wherein the application is configured to receive and store in the memory a personal profile for one or more of the contacts and to receive time information for the one or more contacts based on contact current location information and to enable the user to intelligently interact with the one or more contacts at times that are appropriate for the one or more contacts based on said time information and personal profile.

**2.** The communications device as claimed in claim 1 wherein the time information comprises a current local time for the contact.

**3.** The communications device as claimed in claim 1 wherein the time information comprises a time-zone differential between the user and the contact.

**4.** The communications device as claimed in claim 3 wherein the time-zone differential is updated using the current locations of the user and contact.

**5.** The communications device as claimed in any one of the preceding claims wherein the application is configured to enable the user to intelligently interact with the one or more contacts by selectively enabling the user to send a request to schedule an event with the one or more contacts based on the time information associated with the one or more contacts.

**6.** The communications device as claimed in claim 5 wherein the application comprises an alert for alerting the user that a time selected for an event is inappropriate for the one or more contacts, the alert being triggered by a comparison of the time selected for the event with a predetermined range of acceptable times for scheduling an event with the contact.

**7.** The communications device as claimed in claim 6 wherein the application is configured to provide a manual override to enable the user to nonetheless send the request for the event for the time originally selected even if the time originally selected for the event is inappropriate.

**8.** The communications device as claimed in claim 6 wherein the application is configured to suggest a next available time for scheduling the event.

**9.** The communications device as claimed in any of claims 1 to 4 wherein the application is configured to enable the user to autodial the contact.

**10.** The communications device as claimed in claim 9 wherein the application comprises an alert for alerting the user that it would be inappropriate to autodial the contact, the alert being triggered by a comparison of the current local time for the contact with a predetermined range of acceptable times for telephoning the contact.

**11.** The communications device as claimed in claim 10 wherein the application further comprises a manual override for nonetheless autodialing the contact even if the current local time is outside the predetermined range of acceptable times for the telephoning the contact.

**12.** The communications device as claimed in claim 10 wherein the application is adapted to further suggest to the user at least one alternative means of communication that would be more appropriate for communicating with the contact given the current local time associated with the contact.

**13.** The communications device as claimed in any one of the preceding claims further comprising:
an onboard positioning system for generating position data for the communications device;
a tracking module for receiving the position data from the positioning system and for communicating the position data through a network connection to a server for storing and updating current location information for all networked contacts, whereby each user can update the current locations of that user's contacts by downloading the current location information from the server.

**14.** The communications device as claimed in claim 13 wherein the positioning system is a global positioning system 'GPS' chip embedded within the communications device.

**15.** A method for enabling a user to intelligently interact with one or more contacts stored in an address book of an e-mail application, the method comprising steps of:
receiving and storing a personal profile for one or more of the contacts;
receiving time information for the one or more contacts based on contact current location information;
enabling the user to select one or more contacts from the address book with whom the user desires to interact;
enabling the user to select an interaction function for interacting with the one or more contacts;
determining, for each of the one or more contacts, an availability to interact with the user based on said time information and personal profile associated with each contact; and
notifying the user of the availability of each of the one or more contacts.

**16.** The method as claimed in claim 15 wherein the step of determining the availability of the contact comprises a step of determining a time-zone differential for the contact relative to the user.

**17.** The method as claimed in claim 16 wherein the step of determining the time-zone differential for the contact relative to the user comprises a step of updating current locations for the user and the contact.

**18.** The method as claimed in claim 15 wherein the step of determining the availability of the contact comprises a step of determining a current local time for the contact.

**19.** The method as claimed in claim 18 wherein the step of determining the current local time for the contact comprises a step of updating a current location for the contact.

**20.** The method as claimed in any one of claims 15 to 19 wherein the interaction function comprises auto-dialling the contact.

**21.** The method as claimed in claim 20 further comprising a step of alerting the user that the current local time is not within predetermined acceptable times for receiving telephone calls.

**22.** The method as claimed in claim 21 further comprising a step of enabling the user to autodial the contact notwithstanding that the current local time for the contact is outside the predetermined acceptable times for receiving telephone calls.

**23.** The method as claimed in any one of claims 15 to 19 wherein the interaction function comprises sending an instant message (IM) to a selected contact's IM-enabled e-mail address.

**24.** The method as claimed in claim 23 further comprising a step of alerting the user that the current local time is not within predetermined acceptable times for receiving instant messages.

**25.** The method as claimed in claim 24 further comprising a step of enabling the user to instant-message the contact notwithstanding that the current local time or the contact is outside the predetermined acceptable times for receiving instant messages.

**26.** The method as claimed in any one of claims 15 to 19 wherein the interaction function comprises sending an invitation for an event to one or more contacts in the user's address book.

**27.** The method as claimed in claim 26 further comprising a step of alerting the user that a time slot proposed to the contacts for the event is outside the predetermined acceptable times for scheduling such an event for at least one of the contacts whose presence is required.

**28.** The method as claimed in claim 27 further comprising a step of enabling the user to send the invitation of the event notwithstanding that the time slot proposed for the event is outside the predetermined acceptable times for at least one of the contacts whose presence is required.

**29.** The method as claimed in any one of claims 15 to 28 wherein the step of determining the availability of the contact comprises a step of deriving the time information from a telephone number associated with the contact.

**30.** The method as claimed in any one of claims 15 to 28 wherein the step of determining the availability of the contact comprises a step of deriving the time information from an address associated with the contact.

**31.** A communications system for enabling a networked user to interact intelligently with contacts through a network, the system comprising:
a communications device as claimed in any one of claims 1 to 14;
a positioning system for determining a current position of one or more of the contacts by locating communications devices associated with the one or more contacts; and
a server for receiving and storing the current position for at least one of the contacts, the server being connected to the network to enable the user to download position data for the at least one contact to update the time information for that contact.

**32.** The system as claimed in claim 31 wherein the positioning system comprises a GPS-enabled wireless device which is configured to periodically transmit GPS position data to the server to update the current location of the device.

**33.** A communications device comprising:
an input device enabling a user of the communications device to input data for initiating communication with another person;
a processor for correlating the input data with a global location and thus a current local time of day for the person with whom the communication is to be established, the current local time being updated by updating the global location for the person based on current location information; and
an output device for alerting the user if the current local time associated with the other person is inappropriate as specified by the person in a respective personal profile communicated to the communications device of the user and stored in the memory of the communications device.

**34.** The communications device as claimed in claim 33 wherein the input data comprises a telephone number from which the current local time is derived by correlating an area code and a prefix with a geographical location.

**35.** The communications device as claimed in claim 33 wherein the input data comprises a telephone number of a roaming wireless device from which the current local time is derived by determining in which time zone the wireless device is currently roaming.

**36.** The communications device as claimed in claim 33 wherein the input data comprises an e-mail address from which the current local time is derived by correlating an IP address with a geographical location.

**37.** The communications device as claimed in any one of claims 33 to 36 wherein the output device comprises a display screen embedded within the device for providing a visual alert to the user if the current local time is inappropriate for receiving the communication.

**38.** The communications device as claimed in any one of claims 33 to 36 wherein the output device comprises a speaker for providing an oral alert to the user if the current local time is inappropriate for receiving the communication.

**39.** The communications device as claimed in any one of claims 33 to 36 wherein the output device is configured to suggest at least one alternative means for communicating with the other person if the current local time is inappropriate for receiving the communication.

**40.** A computer readable medium storing computer readable instructions for causing a computing device to perform the method of any one of claims 15 to 30.
